# EUROPEAN PATENT APPLICATION

(11) **EP 2 631 901 A2**
(43) Date of publication of application: **28.08.2013**
(21) Application number: 12192487.2
(22) Date of filing: 13.11.2012
(51) Int. Cl.: G09G 5/00

(54) **Apparatus and method for displaying an image on a sink device**

(30) Priority: 21.02.2012 KR 20120017578
(71) Applicant: Pantech Co., Ltd., Seoul 121-792 (KR)
(72) Inventor: Park, Pyoung Oh, 121-792 Seoul (KR)
(74) Representative: Jordan, Volker Otto Wilhelm

(57) **Abstract**

A source device includes a local display device to display a first image provided by an application program, a virtual display device driving unit to receive display information of a sink device, and to transmit frame data to display on the sink device a second image provided by the application program, and a virtual file generating unit to register the sink device as a virtual display device, and to generate a virtual device file for the sink device. A method for displaying an image on a sink device includes generating, at a source device, a first image and a second image; registering, at the source device, the sink device as a virtual display device; transmitting, from the source device, frame data for displaying the second image to the sink device; and displaying the second image on the sink device.

## Description

### CROSS-REFERENCE TO RELATED APPLICATION

This application claims priority from and the benefit under 35 U.S.C. §119(a) of Korean Patent Application No. 10-2012-0017578, filed on February 21, 2012, which is hereby incorporated by reference for all purposes as if fully set forth herein.

### BACKGROUND

FIELD

Exemplary embodiments of the present invention relate to a displaying method of a remote sink device, and a source device and system for the same, and more particularly, to a displaying method of a remote sink device in a wireless network, and a source device and system for the same.

DISCUSSION OF THE BACKGROUND

With the development of electronics and communication technologies, the wireless communication techniques may be widely used in various industrial fields, such as communication fields and service fields. Accordingly, various kinds of service, such as voice calling, data transmission, and Internet may be provided based on a wireless network. In an example, the wireless communication techniques based on a wireless communication network may include Wireless Broadband internet (WiBro), Wireless Fidelity (WiFi), or the like.

WiFi is one of short-distance wireless communication techniques based on Institute of Electrical and Electronics Engineers (IEEE) 802.11 standards, which may include a wireless Local Area Network (LAN) technique allowing high-performance wireless communication by adopting a wireless technique to High Fidelity (Hi-Fi). The wireless LAN technique may allow construction of a network by using wireless signals, such as a radio wave or light, without using a wired line.

If such a technology, such as a WiFi technique is used, a portable computer, such as a notebook may be connected wirelessly and used at various locations. In addition, if the WiFi technique is used, a plurality of personal computers (PCs) may be connected to transmit larger files, such as a graphics file, an audio file, and a video file. For example, the WiFi network may provide a data transfer rate of 11 megabits per second (Mbps), and may be used at various places or locations within a home, office, or other locations within a radius of 500 meters (m) from a network source under a reference condition.

Further, in addition to portable computers, such as notebooks that may be provided with a WiFi operation, as more smart phones are placed into the market place, more smart phones may be connected to the WiFi service as well since users may use smart phones like PCs.

However, when a smart phone or a PC, which may communicate using a WiFi service may display an image or information provided by an application program by using a source device or a sink device, respectively. The sink device may receive and display a screen or an image from the source device. More specifically, the sink device may display the same screen as the screen displayed by the source device. Accordingly, while various features, such as resolution of the display of the sink device may not be reflected, the screen provided from the source device may be displayed indiscriminately.

Therefore, even though two or more devices are used, the same screen may be displayed, which may limit the utilization of the sink device. In addition, in a case where two or more sink devices are used, the wireless interface may be requested for every sink device, which may burden the corresponding wireless network.

### SUMMARY

Exemplary embodiments of the present invention provide an apparatus and a method for remotely displaying an image of a source device on a sink device.

Additional features of the invention will be set forth in the description which follows, and in part will be apparent from the description, or may be learned by practice of the invention.

Exemplary embodiments of the present invention provide a method for displaying an image on a sink device including executing a first application program at a source device; displaying on the source device a first image provided by the first application program; receiving, at the source device, display information of the sink device; registering, at the source device, the sink device as a virtual display device; generating, at the source device, a virtual device file for the virtual display device; writing, at the source device, frame data with respect to the virtual device file for displaying a second image provided by the first application program on the sink device; transmitting the frame data to the sink device; and displaying the second image on the sink device using the frame data.

Exemplary embodiments of the present invention provide a source device including a local display device to display a first image provided by an application program; a virtual display device driving unit to receive display information of a sink device, and to transmit frame data to display on the sink device a second image provided by the application program; and a virtual file generating unit to register the sink device as a virtual display device, and to generate a virtual device file for the sink device, in which the application program writes the frame data with respect to the virtual device file.

Exemplary embodiments of the present invention provide a method for displaying an image on a sink device including generating, at a source device, a first image and a second image; registering, at the source device, the sink device as a virtual display device; transmitting, from the source device, frame data for displaying the second image to the sink device; and displaying the second image on the sink device.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a block diagram illustrating a wireless local area network (LAN) system according to an exemplary embodiment of the present invention.

FIG. 2 is a diagram illustrating images displayed on a source device and a sink device of FIG. 1.

FIG. 3 illustrates a software code for a sink display device driving unit to collect extended display identification data (EDID) information of a sink display device according to an exemplary embodiment of the present invention.

FIG. 4 illustrates EDID information of a sink display device according to an exemplary embodiment of the present invention.

FIG. 5 is a diagram illustrating a message used to transmit the EDID information of a sink display device according to an exemplary embodiment of the present invention.

FIG. 6 illustrates codes for a virtual display device driving unit to analyze EDID information according to an exemplary embodiment of the present invention.

FIG. 7 is a block diagram illustrating a source device of a wireless LAN system according to an exemplary embodiment of the present invention.

FIG. 8 is a block diagram illustrating a source device of a wireless LAN system according to an exemplary embodiment of the present invention.

FIG. 9 is a flowchart illustrating a display method for a remote sink display device according to an exemplary embodiment of the present disclosure.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity.

It will be understood that when an element is referred to as being "connected to" another element, it can be directly connected to the other element, or intervening elements may be present. Further, it will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ).

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

Hereinafter, exemplary embodiments of a source device and a displaying method will be described with reference to the drawings.

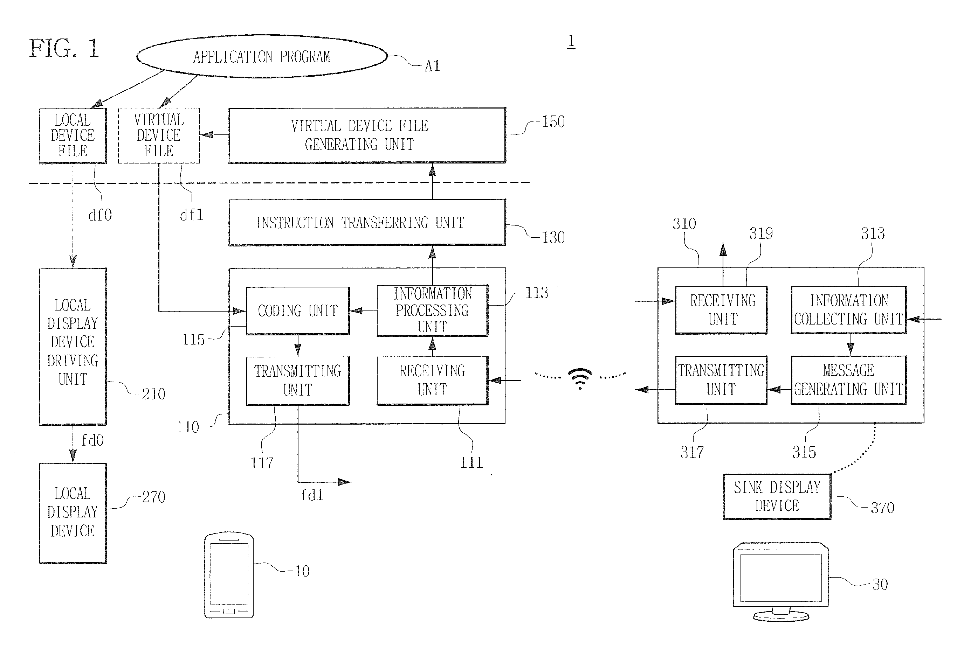

FIG. 1 is a block diagram illustrating a wireless local area network (LAN) system according to an exemplary embodiment of the present invention.

Referring to FIG. 1, a wireless Local Area Network (LAN) system 1 includes a source device 10, and a sink device 30 separated from the source device 10 by a distance. However, aspects of the invention are not limited thereto, such that other short-range communication technologies or wireless networks may be used.

The source device 10 may include various kinds of mobile computing devices that may access the Internet, such as a smart phone, a tablet computer, a netbook, a personal digital assistant (PDA), a portable media player (PMP), and other devices that may execute various application programs based on an operating system (OS).

The OS may be a system program, which may allow an application program to use or access computer hardware to perform an operation. In an example, OS may include, without limitation, various kinds of OSs that may be loadable on mobile computing devices, such as Android® OS, Apple's iOS®, Windows Mobile OS®, Bada OS®, Symbian OS®, and Blackberry® OS.

The application program may refer to a program which may be developed to perform a specific operation by using a computing device. The application program may include programs associated with multimedia contents, such as games, moving picture, and digital images, and executable programs, such as image viewers, and moving picture regenerators to execute the multimedia content. However, aspects of the invention are not limited thereto, such that the application program may include business applications, web based applications, and other applications that may generate images or information on a display screen.

The sink device 30 may include various kinds of communication devices which may allow communication operation through a wireless LAN with the source device 10, which may include, without limitation, at least mobile computing devices, desktop computers, and smart television (TV). The sink device 30 may display a frame data fd1 provided from the source device 10 so that an image or information generated by an application program A1 executed at the source device 10 may be displayed.

The source device 10 and the sink device 30 may have a platform supporting the wireless LAN, and may communicate with each other through the wireless LAN. The wireless LAN may allow high-speed communication or access to the Internet to various devices located within a predetermined distance of a source node by using radio waves or infrared (IR) rays, without using a wired line, and may include various kinds of local wireless communication techniques, such as Wireless Fidelity (WiFi) and/or Wireless Broadband (WiBro).

During a discovery process where the source device 10 searches for a sink device 30 in the wireless LAN system, if a sink device 30 is found, the source device 10 may receive display information from the sink device 30 and may register the sink device 30 as a virtual display device.

If the source device 10 recognizes the sink device 30, which may be registered as a virtual display device, as a local display device, the source device 10 may transmit a frame data fd1 to the sink device 30 to display an image or information provided by the application program A1 at the sink device 30. Further, the source device 10 may generate a virtual device file df1 so that the application program A1 may access the sink device 30. This will be described in more detail later.

In addition to components to drive the sink device 30, the source device 10 may further include a local device file df0, a local display device driving unit 210, and a local display device 270 to display an image or information provided by the application program A1 at the source device 10.

The local display device 270 may display an image or information provided by the application program A1, which may be executed at the source device 10. The local device file df0 may be a file in which the frame data fd0 to display an image or information provided by the application program A1 at the local display device 270 is written, and may be included in the source device 10, differently from a newly generated virtual device file df1. The local display device driving unit 210 may output the frame data fd0 to the local display device 270.

If the source device 10 does not include the local display device 270, the source device 10 may recognize the sink device 30 located at a remote position as a local display device corresponding to the source device 10, even though there may be no wired connection or a wireless interface.

If the source device 10 includes the local display device 270, the sink device 30 connected through a wireless LAN may be recognized as another local display device, and the local display device 270 and the sink device 30 may be utilized as a multiplex local display device of the source device 10. Accordingly, the outputted image or information provided by the application program A1 may be displayed in various ways as being integrated with images of the source device 10 and the sink device 30 or be divided or copied. For example, the application program executed in the source device 10 may provide a first image and a second image, in which the first image may be displayed in the source device 10 and the second image may be displayed at the sink device 30. In another example, the application program executed in the source device 10 may provide a single image that may be divided into a first part and a second part, in which the first part of the single image may be displayed in the source device 10 and the second part of the single image may be displayed in the sink device 30.

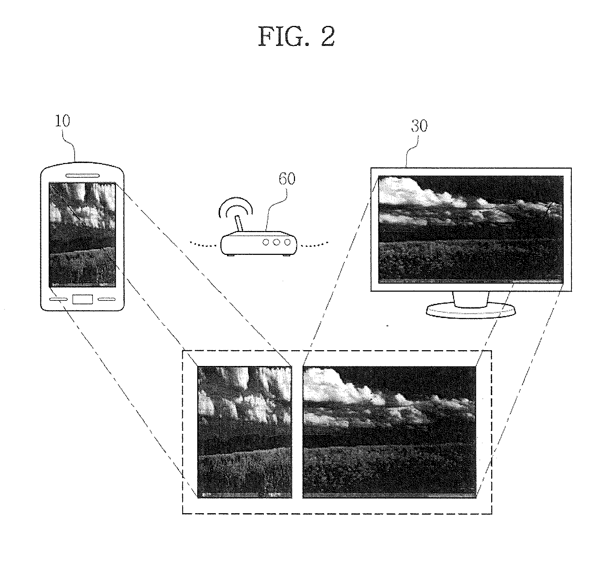

FIG. 2 is a diagram illustrating images displayed on a source device and a sink device of FIG. 1.

Referring to FIG. 2, different images are illustrated as being outputted from the source device 10 and the sink device 30, so that a single integrated image may be displayed when the two images are combined. The source device 10 may recognize the sink device 30 as a virtual local display device and the two devices may display various images independently from each other. Even though FIG. 2 depicts an access point (AP) 60, the access point may be omitted. Further, aspects of the invention are not limited thereto, such that the source device and the sink device 30 may communicate to display the two images using a short range communication technology or a wireless network.

Further, the sink device 30 may provide its display information to the source device 10, receive the frame data fd1 used to display an image or information provided by the application program A1 from the source device 10, and display the frame data fd1.

The sink device 30 includes a sink display device driving unit 310 to provide display information to the source device 10 and to receive the frame data fd1. The sink device 30 may also include a sink display device 370 to display an image or information provided by the application program A1 by using the frame data fd1.

The sink display device driving unit 310 and the sink display device 370 may be integrated and configured to operate as a single device. In other cases, the sink display device driving unit 310 and the sink display device 370 may be configured to operate as separate devices, which may be connected through a wireless or wired network.

Referring again to FIG. 1, the sink display device driving unit 310 includes an information collecting unit 313, a message generating unit 315, a transmitting unit 317 and a receiving unit 319. The sink display device driving unit 310 may be formed in a kernel region of the sink device 30. The transmitting unit 317 and the receiving unit 319 may be configured as a single unit even though they are depicted as separate blocks. However, aspects of the invention are not limited thereto, such that the transmitting unit 317 and the receiving unit 319 may be configured as separate units. Further, some or all of the components illustrated herein may be configured into a single unit or separate units.

The information collecting unit 313 may collect display information of the sink display device 370. When a discovery request to identify one or more sink device is received from the source device 10, the information collecting unit 313 may collect display information of the identified sink devices, such as the sink display device 370, based on the received request. The display information of the sink display device 370 may be transmitted in a form of extended display identification data (EDID). The EDID may be a standard for transmitting display information from a display side to a host side, and may have a data format for transmitting the capability of the display to a host.

For example, the sink display device driving unit 310 and the sink display device 370 may be connected through a High-Definition Multimedia Interface (HDMI). Here, the HDMI may be mapped to input and output ports of the sink display device 370 so as to be accessible to the sink display device 370 through a system register.

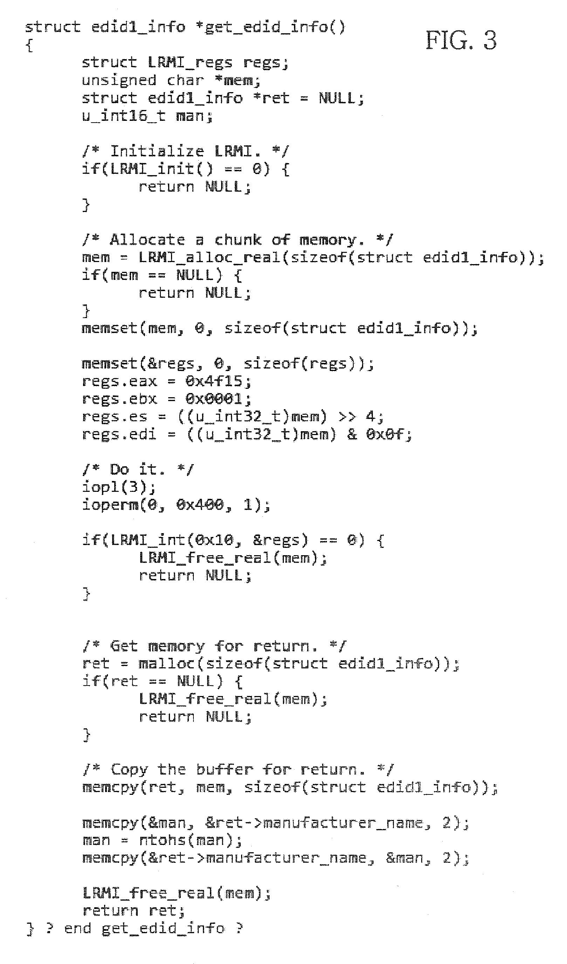

FIG. 3 illustrates a software codes for a sink display device driving unit to collect EDID information of a sink display device according to an exemplary embodiment of the present invention.

Referring to FIG. 3, a software code that may be used by the information collecting unit 313 to collect EDID information of the sink display device 370 is illustrated. The information collecting unit 313 may collect the EDID information of the sink display device 370 by using the illustrated codes. However, aspects of the invention are not limited thereto, such that different software codes or algorithms may be used.

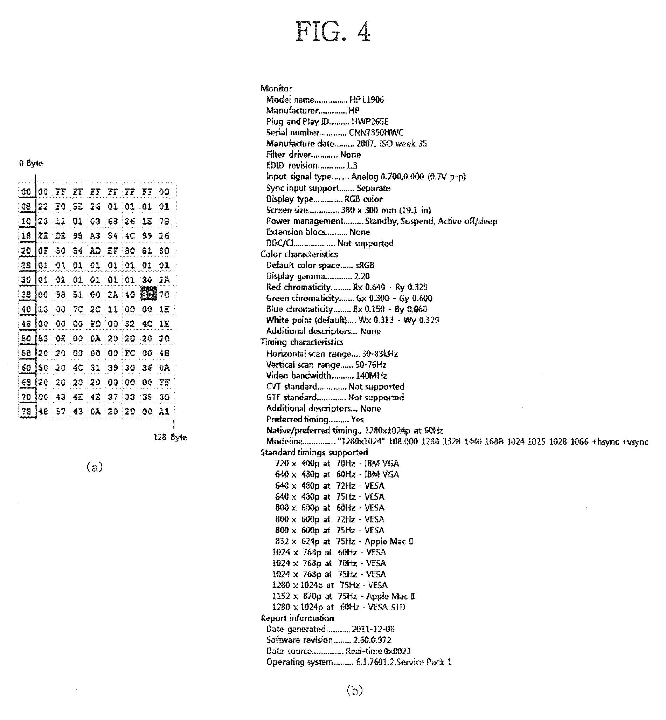

FIG. 4 illustrates EDID information of a sink display device according to an exemplary embodiment of the present invention.

FIG. 4(a) shows the display information of the sink display device 370, which may be an EDID raw data having 128 byte. In addition, FIG. 4(b) shows actual information that may be included in the EDID raw data.

As shown in FIG. 4b, if the sink display device 370 is a monitor, the actual data may include at least one of device information, such as a model name, a manufacturer, a serial number, and a manufacture date. Further, the actual data may also include display attributes, which may include at least one of chromatic data information (i.e., red-green-blue (RGB) data information), timing information, and resolution. The device information may be used by the sink device 30 to establish a session with the source device 10. The display information may be used by the source device 10 to transmit the frame data fd1 to the sink device 30.

The message generating unit 315 may generates message to transmit the EDID information of the sink display device 370, which may be received from the information collecting unit 313, to the source device 10. The message generating unit 315 may configure a message by expanding an information element which may be used as a standard in the wireless LAN communication. The information element may be configured with an identifier, an information element length, and information content. Further, the information element may be transmitted in a format of a WiFi display protocol message.

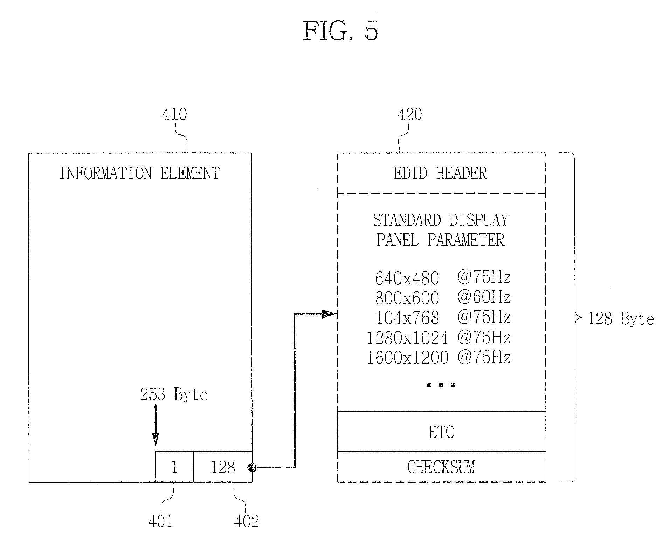

FIG. 5 is a diagram illustrating a message used to transmit the EDID information of a sink display device according to an exemplary embodiment of the present invention.

Referring to FIG. 5, an expanded WiFi display protocol message generated by the message generating unit 315 is depicted. The protocol message 410 showing an information element may be a data of 256 bytes, which may be used as 253^{th} to 255^{th} bytes are expanded. 253^{th} byte 401 of the protocol message 410 may indicate whether extended information is present.

In more detail, if the 253^{th} byte 401 of the protocol message 410 has data of '0', the data may indicate that there is no extended information. If the 253^{th} byte 401 has data of '1', the data may indicate that extended information is present. Further, if the 253^{th} byte 401 of the protocol message 410 has data of '1', following 254^{th} and 255^{th} bytes 402 may indicate a size of the extended information.

The extended information 420 including the EDID information of the sink display device 370 may include information size, which may be indicated by the 254^{th} and 255^{th} bytes 402. The extended information 420 may include at least one of an EDID header, a standard display panel parameter, and a checksum. The standard display panel parameters may include, without limitation, at least a resolution of the sink display device 370, a bandwidth corresponding to the resolution, and display option information. The extended information 420 may be configured with binary codes.

The transmitting unit 317 may transmit the expanded WiFi display protocol message, which may be generated by the message generating unit 315, to the source device 10. The expanded WiFi display protocol message may be used when the source device 10 transmits the frame data fd1 to the sink device 30.

If the sink device 30 is connected to the source device 10 and the source device 10 transmits the frame data fd1 to display an image or information provided by the application program A1, the receiving unit 319 may receive the frame data fd1 and transmit the frame data fd1 to the sink display device 370. The frame data fd1 may be decoded as data used in the sink display device 370 or time-controlled, and then the processed frame data fd1 may be transmitted to the sink display device 370.

The sink display device 370 may display the frame data fd1 so that an image or information provided by the application program A1 may be partially or entirely displayed. The sink display device 370 may operate like a virtual local display device of the source device 10 to display an image independent from the local display device 270 of the source device 10.

Referring again to FIG. 1, the source device 10 includes a virtual display device driving unit 110, an instruction transferring unit 130 and a virtual device file generating unit 150. The source device 10 may virtualize and operate the sink device 30 as a local display device.

The instruction transferring unit 130 and the virtual device file generating unit 150 may be formed in a kernel region of the operating system of the source device 10, and the virtual device file generating unit 150 may be formed in an interface region of the application program, such as a user region. The kernel region may include information associated with a computer operating system to provide interrupt treatment, process management, memory management, file system management, and programming interface. Further the kernel region may also store information corresponding to various devices of the computer. Therefore, the kernel region may generally be loaded on an inaccessible memory, and may be regarded as an Application Program Interface (API) used to control hardware.

The virtual display device driving unit 110 may receive the display information of the sink device 30, and transmit the frame data fd1 to the sink device 30 to display an image or information provided by the application program A1 at the sink device 30. Referring again to FIG. 1, the virtual display device driving unit 110 includes a receiving unit 111, an information processing unit 113, a coding unit 115 and a transmitting unit 117. The receiving unit 111 and the transmitting unit 117 may be configured as a single unit even though they are depicted as separate blocks.

The receiving unit 111 may control the source device 10 to communicate with the sink device 30 through a wireless network, such as a LAN, and may receive the expanded WiFi display protocol message from the sink device 30. If the 253^{th} byte 401 of the expanded WiFi display protocol message is determined to have data of '1', the receiving unit 111 may transmit extended information 420 to the information processing unit 113. Further, the extended information 420 may be transmitted from the receiving unit 111 to the information processing unit 113 through a buffer.

The information processing unit 113 may parse the extended information 420 in order to analyze the display information of the sink device 30.

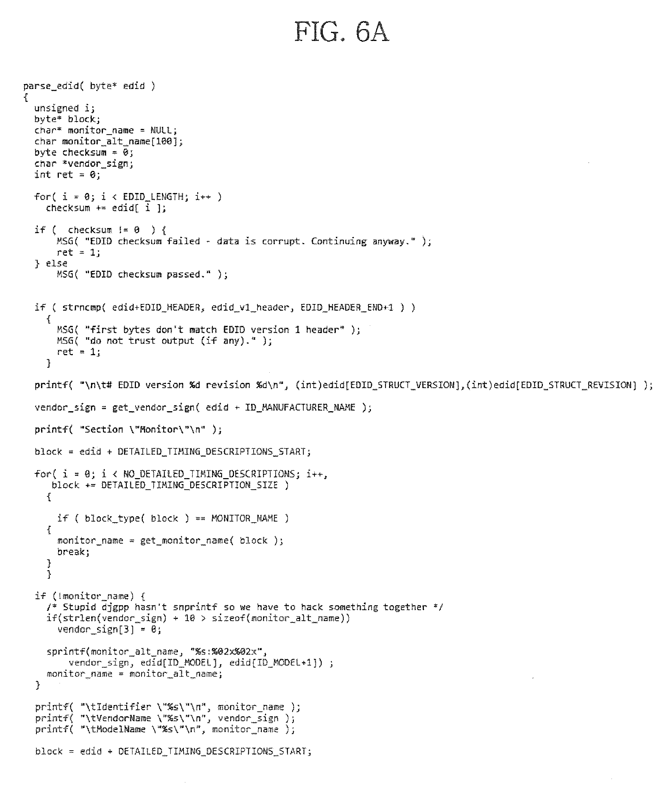

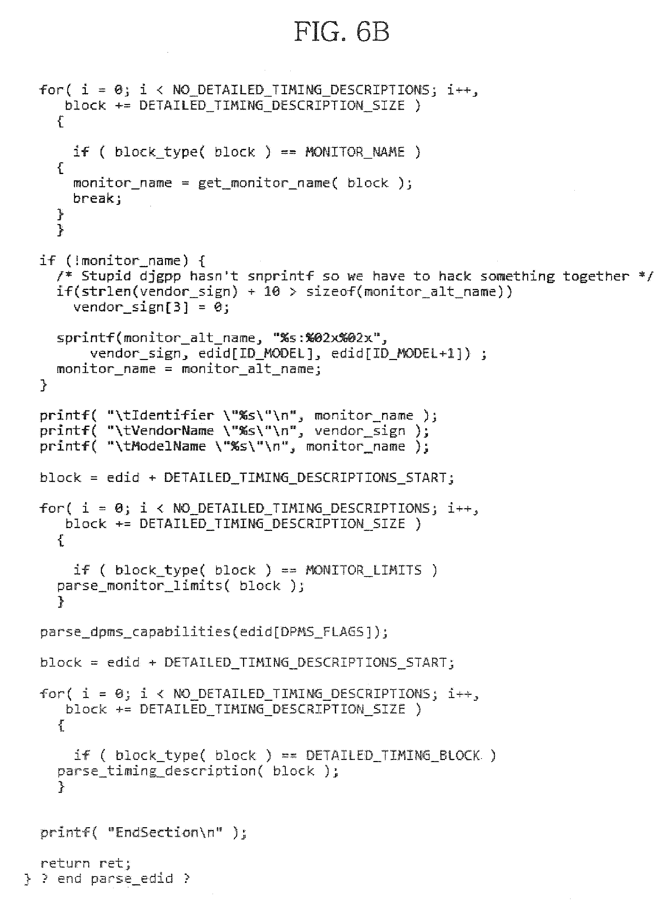

FIG. 6 illustrates codes for a virtual display device driving unit to analyze EDID information according to an exemplary embodiment of the present invention.

Referring to FIG. 6, a process of parsing each section of the EDID information of the information processing unit 113 is depicted. FIG. 6a and FIG. 6b may refer to a continued code of a single code, even though they are depicted separately.

Among resolution information included in the analyzed EDID information, the information processing unit 113 may determine a target resolution having latency below a reference threshold in consideration of a bandwidth on the wireless communication network. In addition, among the parsed EDID information, the information processing unit 113 may transmit timing description information to the coding unit 115. In addition, when receiving the display information of the sink device 30, the information processing unit 113 may transmit a system call for the device registration of the instruction transferring unit 130 so that sink device 30 may be registered.

The instruction transferring unit 130 may transmit a system call for the device registration and may be formed in the kernel region of the operating system of the source device 10. For example, in a case where the operating system is determined to be Android®, the instruction transferring unit 130 may be a Linux® kernel.

When the information processing unit 113 transmits a system call to register the instruction transferring unit 130, the instruction transferring unit 130 may load the virtual display device driving unit 110 on a memory of the kernel region, and may transmit a device registration event to the virtual device file generating unit 150.

The virtual device file generating unit 150 may register the sink device 30 as a virtual display device in response to the device registration event transferred from the instruction transferring unit 130, and may generate a virtual device file df1 for the sink device 30. For example, in a case where the operating system is determined to be Android®, the virtual device file generating unit 150 may be udevd or udev, which may be a device manager of a Linux® kernel. More specifically, udevd or udev may be a daemon processor taking charge of generating and deleting a dynamic device file, which may be a program continuously executed to treat periodic service requests.

The virtual device file df1 may act as an interface so that the application program A1 may access the virtual display device driving unit 110, and allows the application program A1 to interact with the virtual display device driving unit 110 by using a system call. The virtual device file df1 may exist when the application program A1 is executed, or may automatically be deleted if the application program A1 does not execute an operation for a predetermined period of time.

The generated virtual device file df1 may be mapped with the coding unit 115 of the virtual display device driving unit 110, which may have been loaded during a device registration process. The application program A1 may write the frame data fd1 to display an image or information provided by the application program A1 at the sink device 30, in the virtual device file df1.

The coding unit 115 may encode the frame data fd1 transmitted through the virtual device file df1 to give the target resolution determined by the information processing unit 113, and may transmit the frame data fd1 to the transmitting unit 117.

The transmitting unit 117 may transmit the encoded frame data fd1 to the sink device 30, and the sink device 30 receiving the encoded frame data fd1 may display an image or information provided by the application program A1.

According to exemplary embodiments of the invention, different from an existing technique where only a copied image may be transmitted to the sink device, the image or information provided by the application program A1 may be integrated, divided, or copied and then outputted to the source device 10 and the sink device 30, which may display different images. For example, when integrating images of different devices, as shown in FIG. 2, images displayed at the source device 10 and the sink device 30 may configure an integrated single screen. When dividing an image, if the application program A1 is a game application, a console to control the game may be displayed at the local display device 270 of the source device 10, and a game image may separately be displayed at the sink display device 370 of the sink device 30. When copying an image, similar to a related technique, the same image may be displayed on the source device 10 and the sink device 30. Further, when providing the same image, a target resolution may be provided in the sink device 30 by using the display information of the sink device 30.

According to exemplary embodiments of the present invention, an image or information provided by the application program A1 may be displayed at the sink device 30 without a separate wireless interface by recognizing the remote sink device 30 as a virtual local display device.

In addition, since the images outputted from the source device 10 and the sink device 30 may be independently displayed, the screens may be utilized in various ways according to the selection of a user or the characteristics of the application program A1. Further, since various output options of the display information may be provided from the sink device 30 so that a target resolution may be selected according to corresponding situations, a variable screen transmission method may be implemented.

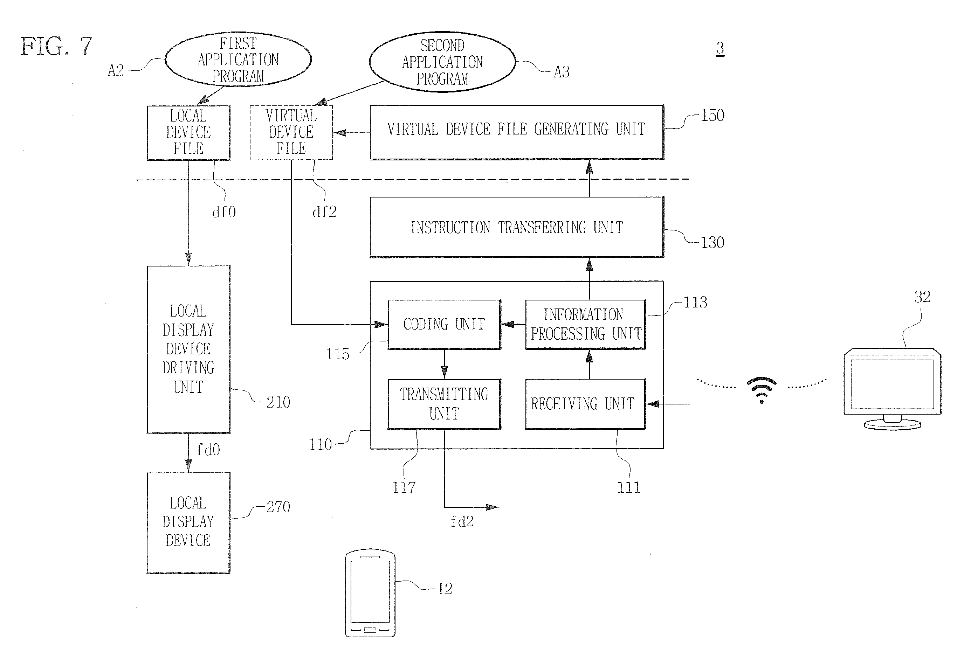

FIG. 7 is a block diagram illustrating a source device of a wireless LAN system according to an exemplary embodiment of the present invention.

Referring to FIG. 7, the wireless LAN system 3 may be substantially similar to the source device 10 and the sink device 30 of the wireless LAN system 1 of FIG. 1, except that the source device 12 executes two application programs, application A2 and application A3. Therefore, the same components included in the source device 10 and the sink device 30 of FIG. 1 may be endowed with the same numerical references and detailed descriptions thereof may be omitted.

The source device 12 may execute both a first application program A2 and a second application program A3 simultaneously or within a predetermined period of time. If a sink device 32 is discovered during a discovery process where the source device 12 detects other devices registered or connected to the wireless LAN system, the display information may be received from the sink device 32, and the sink device 32 may be registered as a virtual display device.

The source device 12 may recognize the sink device 32, which may be registered as a virtual display device, as a local display device, and may transmit a frame data fd0 or a frame data fd2 to the sink device 32 to display an image or information provided by the first application program A2 or an image or information provided by the second application program A3, respectively, at the sink device 32. Further, the virtual device file generating unit 150 may generate a virtual device file df0 or a virtual device file df2 so that the first application program A2 or the second application program A3, respectively, may access the virtual display device driving unit 110.

Accordingly, the image or information provided by the first application program A2 may be displayed at the local display device 270 of the source device 12, and the image or information provided by the second application program A3 may be displayed at the sink display device 370 of the sink device 32. Further, the frame data fd0 for displaying the image or information provided by the first application program A2 may be written in the local device file df0, which may be outputted to the local display device 270. In addition, the frame data fd2 to display the image or information provided by the second application program A3 may be written in the virtual device file df2, and transmitted to the sink device 32 to be displayed thereon.

Further, although FIG. 7 illustrates two application programs, application A2 and application A3, being executed by the source device 12 to respectively display at the source device 12 and the sink device 32, more than two application programs may be executed. Images or information provided by the applications may be displayed at the source device 12 and/or the sink device 32 according to the selection of a user or the characteristic of the application program. Further, two or more sink devices 32 may be provided and utilized.

According exemplary embodiments of the present invention, images or information provided by multiple application programs may be displayed on the source device 12 and/or the sink device 32 without using a separate wireless interface.

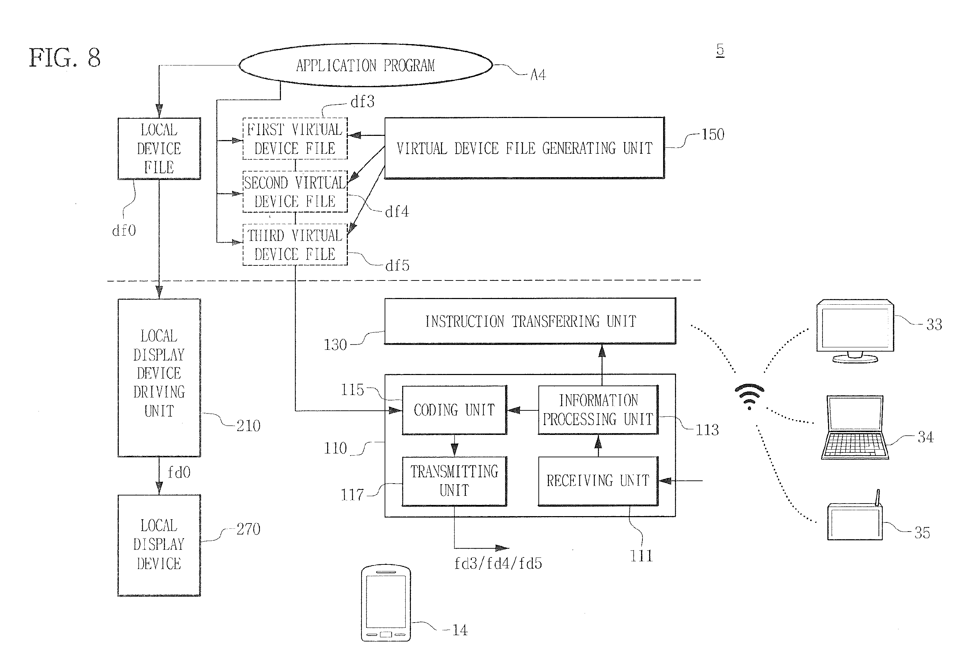

FIG. 8 is a block diagram illustrating a source device of a wireless LAN system according to an exemplary embodiment of the present invention.

Referring to FIG. 8, the wireless LAN system 5 may be substantially similar to the source device 10 and the sink device 30 of the wireless LAN system 1 of FIG. 1, except that multiple sink devices, a first sink device 33, a second sink device 34, and a third sink device 35 are included. Therefore, the same components included in the source device 10 and the sink device 30 of FIG. 1 may be endowed with the same numerical references and detailed descriptions thereof may be omitted.

Referring to FIG. 8, the wireless LAN system 5 includes three sink devices, namely a first sink device 33, a second sink device 34, and a third sink device 35. If the first sink device 33, the second sink device 34, and the third sink device 35 are discovered during a discovery process where the source device 14 detects other devices registered or connected to the wireless LAN system, the display information may be received from the first sink device 33, the second sink device 34, and the third sink device 35, and the first sink device 33, the second sink device 34, and the third sink device 35 are may be registered as virtual display devices. The first sink device 33, the second sink device 34, and the third sink device 35 may be registered subsequently or simultaneously.

The source device 14 may recognize the first sink device 33, the second sink device 34, and the third sink device 35, which may be registered as virtual display devices, as local display devices, and may transmit a first frame data fd3, a second frame data fd4, and a third frame data fd5 to the first sink devices 33, second sink device 34, and third sink device 35, respectively, to display one or more images provided by an application program A4. Further, the virtual device file generating unit 150 may generate a first virtual device file df3, a second virtual device file df4, and a third virtual device file df5 so that the application program A4 may access the virtual display device driving unit 110.

More specifically, the first frame data fd3 of the application program A4 may be written in the generated first virtual device file df3, and transmitted through the virtual display device driving unit 110 to the first sink device 33 to be displayed thereon. Similarly, the second frame data fd4 of the application program A4 may be written in the generated second virtual device file df4, and transmitted through the virtual display device driving unit 110 to the second sink device 34 to be displayed thereon. The third frame data fd5 of the application program A4 may be written in the third virtual device file df5, and transmitted through the virtual display device driving unit 110 to the third sink device 35 to be displayed thereon.

The image provided by the application program A4 may be integrated, divided or copied, and outputted to the source device 14, the first sink device 33, the second sink device 34, and the third sink device 35. Further, although FIG. 8 illustrates three sink devices, the first sink device 33, the second sink device 34, and the third sink device 35 are included in the wireless LAN system 5, the number of sink devices may be more than three, and the image of the application program A4 may be partially or entirely displayed at the source device 14, the first sink device 33, the second sink device 34, and/or the third sink device 35 according to the selection of a user or the characteristic of the application program A4.

According to exemplary embodiments of the present invention, the first frame data fd3, the second frame data fd4, and the third frame data fd5 to display the image provided by the application program A4 may be transmitted to the first sink device 33, the second sink device 34, and the third sink device 35, respectively, by using the first virtual device file df3, the second virtual device file df4, and the third virtual device file df5 generated by the virtual device file generating unit 150 Further, this transmission of frame data may performed without using a separate wireless interface for the first sink device 33, the second sink device 34, and the third sink device 35.

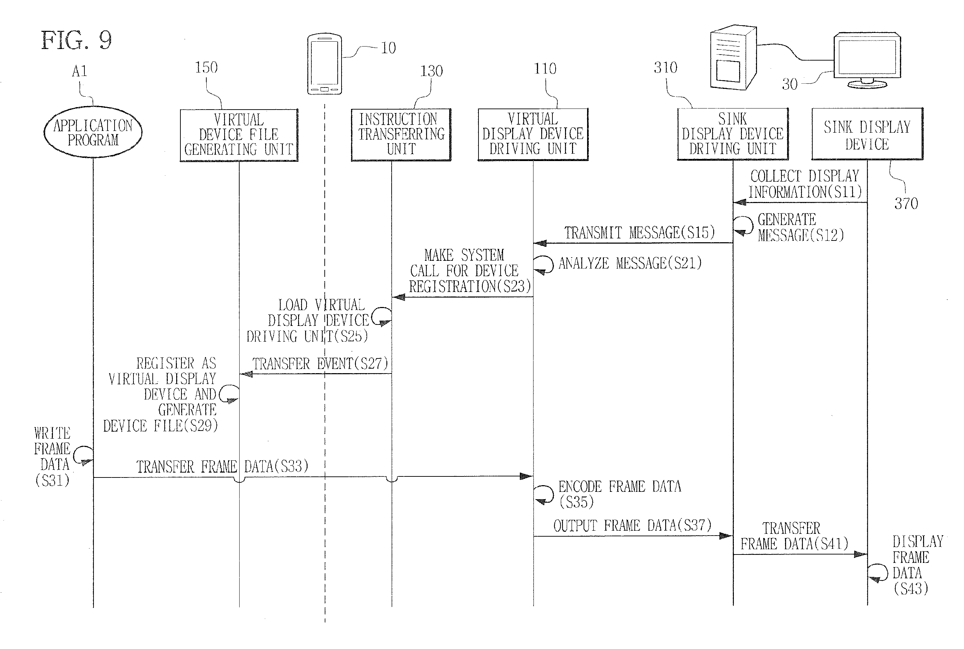

FIG. 9 is a flowchart illustrating a display method for a remote sink display device according to an exemplary embodiment of the present disclosure.

Referring to FIG. 9, a displaying method for a remote sink display device will be described as if performed by the source device 10 and the sink device 30 of FIG. 1, but is not limited as such.

The sink display device driving unit 310 collects display information of the sink display device 370 and transmits to the sink display device driving unit 310 (S11). The sink display device driving unit 310 generates a message for transmitting the display information to the source device 10 (S13). The message may be configured with an expanded WiFi display protocol message, and transmitted to the virtual display device driving unit 110 (S15).

The virtual display device driving unit 110 analyzes the message (S21), and transmits or makes a system call for the registration of the sink device 30 to the instruction transferring unit 130 (S23). The instruction transferring unit 130 loads the virtual display device driving unit 110 in a memory of a kernel region (S25), and transfers a device registration event to the virtual device file generating unit 150 (S27).

The virtual device file generating unit 150 registers the sink device 30 as virtual display device in response to the device registration event transmitted from the instruction transferring unit 130, and generates the virtual device file df1 for the sink device 30 (S29).

The virtual device file df1 may provide an interface to the application program A1 so that the application program A1 may access the virtual display device driving unit 110. The application program A1 may interact with the virtual display device driving unit 110 by using the system call.

The application program A1 writes the frame data fd1 with respect to the virtual device file df1 for displaying an image or information provided by the application program A1 at the sink device 30 (S31), and the frame data fd1 is transmitted to the virtual display device driving unit 110 (S33). The frame data fd1 is encoded at the virtual display device driving unit 110 (S35), and the encoded frame data fd1 is outputted to the sink display device driving unit 310 (S37).

The sink display device driving unit 310 decodes or time-controls the frame data fd1, and transfers the frame data fd1 to the sink display device 370 (S41). The sink display device 370 displays the frame data fd1 so that an image or information provided by the application program A1 may be partially or entirely displayed (S43).

According to exemplary embodiments of the present invention, the application program A1 may be displayed at the sink device 30 without a separate wireless interface when the remote sink device 30 is recognized as a virtual local display device. In addition, since the images from the application A1 may be independently displayed on the source device 10 and the sink device 30, the respective images may be utilized in various ways according to the selection of a user or the characteristic of the application program A1.

According to exemplary embodiments of the present invention, since a remote sink device may be virtualized as a local display device of a source device, and an image or information provided by an application program executed at the source device is transmitted, the application program may independently display the image at the sink device through a wireless network. In addition, since the image or information provided by the application program may be integrated, divided or copied at the sink device and then outputted independently to the source device and the sink device, it may be possible to support various uses of the image. For example, the application program executed in the source device may provide a first image and a second image, in which the first image may be displayed in the source device and the second image may be displayed at the sink device. In another example, the application program executed in the source device may provide a single image that may be divided into a first part and a second part, in which the first part of the single image may be displayed in the source device and the second part of the single image may be displayed in the sink device.

Further, when a plurality of application programs is executed, different images of an application or images of different applications may be displayed at the source device and the sink device. In addition, when a plurality of sink devices is provided, independent or complementary images provided by an application may be displayed at the plurality of sink device by using a single source device even though there is no separate wireless interface.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A source device includes a local display device to display a first image provided by an application program, a virtual display device driving unit to receive display information of a sink device, and to transmit frame data to display on the sink device a second image provided by the application program, and a virtual file generating unit to register the sink device as a virtual display device, and to generate a virtual device file for the sink device. A method for displaying an image on a sink device includes generating, at a source device, a first image and a second image; registering, at the source device, the sink device as a virtual display device; transmitting, from the source device, frame data for displaying the second image to the sink device; and displaying the second image on the sink device.

## Claims

1. A method for displaying an image on a sink device, comprising:
generating, at a source device, a first image and a second image;
registering, at the source device, the sink device as a virtual display device;
transmitting, from the source device, frame data for displaying the second image to the sink device; and
displaying the second image on the sink device.

2. A method for displaying an image on a sink device, preferably according to claim 1, comprising:
executing a first application program at a source device;
displaying on the source device a first image provided by the first application program;
receiving, at the source device, display information of the sink device;
registering, at the source device, the sink device as a virtual display device;
generating, at the source device, a virtual device file for the virtual display device;writing, at the source device, frame data with respect to the virtual device file for displaying a second image provided by the first application program on the sink device;
transmitting the frame data to the sink device; and
displaying the second image on the sink device using the frame data.

3. The method claim 1 or 2,
wherein the source device and the sink device are connected by a Local Area Network (LAN) or/and wirelessly;
or/and
wherein the display information comprises extended display identification data (EDID);
or/and
wherein the display information is received as an expanded (Wireless Fidelity) WiFi display protocol message.

4. The method of claim 3, wherein EDID comprises at least one of device information and display attribute,
the device information comprising at least one of a model name, a manufacturer, a serial number, and a manufacture date, and
the display attributes comprising at least one of chromatic information, timing information, and resolution.

5. The method of claim 3 or 4, wherein the WiFi display protocol message indicates whether the message comprises extended information; wherein the extended information preferably comprises at least one of an EDID header, a resolution of the sink device, a bandwidth corresponding to the resolution, display option information, and a checksum.

6. The method of one of claims 1 to 5, wherein the first image and the second image are parts of a single image.

7. The method of one of claims 1 to 5, wherein the first image and the second image are two independent images.

8. The method of one of claims 1 to 5, wherein the first image and the second image are the same image.

9. A source device, comprising:
a local display device to display a first image provided by an application program;
a virtual display device driving unit to receive display information of a sink device, and to transmit frame data to display on the sink device a second image provided by the application program; and
a virtual file generating unit to register the sink device as a virtual display device, and to generate a virtual device file for the sink device,
wherein the application program writes the frame data with respect to the virtual device file.

10. The source device of claim 9, further comprising:
a local display device driving unit to transmit a different frame data to display the first image on the local display device,
wherein the application program writes the different frame data with respect to a local device file corresponding to the local display device.

11. The source device of claim 9 or 10,
wherein the source device is connected to the sink device by a Local Area Network (LAN) or/and wirelessly;
or/and
wherein the display information comprises extended display identification data (EDID);
or/and
wherein the display information is received as an expanded (Wireless Fidelity) WiFi display protocol message.

12. The source device of claim 11, wherein EDID comprises at least one of device information and display attribute,
the device information comprising at least one of a model name, a manufacturer, a serial number, and a manufacture date, and
the display attributes comprising at least one of chromatic information, timing information, and resolution.

13. The source device of claim 11 or 22, wherein the WiFi display protocol message indicates whether the message comprises extended information;
wherein the extended information preferably comprises at least one of an EDID header, a resolution of the sink device, a bandwidth corresponding to the resolution, display option information, and a checksum.

14. The source device of one of claims 9 to 13, wherein the first image and the second image are parts of a single image.

15. The source device of one of claims 9 to 13, wherein the first image and the second image are two independent images.

16. The source device of one of claims 9 to 13, wherein the first image and the second image are the same image.
